# EUROPEAN PATENT APPLICATION

(11) **EP 3 509 383 A1**
(43) Date of publication of application: **10.07.2019**
(21) Application number: 16917367.1
(22) Date of filing: 30.09.2016
(51) Int. Cl.: H04W 74/08

(54) **RANDOM ACCESS METHOD AND APPARATUS**

(71) Applicant: Huawei Technologies Co., Ltd., Longgang District Shenzhen, Guangdong 518129 (CN)
(72) Inventor: MIAO, Jinhua, Shenzhen Guangdong 518129 (CN); WANG, Hong, Shenzhen Guangdong 518129 (CN); QUAN, Wei, Shenzhen Guangdong 518129 (CN); ZHANG, Jian, Shenzhen Guangdong 518129 (CN)
(74) Representative: Pfenning, Meinig & Partner mbB
(86) International application number: PCT/CN2016/101282
(87) International publication number: WO 2018/058617

(57) **Abstract**

A random access method and an apparatus are provided, and the method specifically includes: receiving, by a first network device, a preamble sequence sent by a terminal device; and sending, by the first network device, a first message to the terminal device according to the preamble sequence, where the first message includes access information of a second network device, and the access information of the second network device enables the terminal device to continue to perform a random access process on the second network device based on the access information. The method and the apparatus are used to resolve a prior-art problem of a long delay in a random access solution.

## Description

### TECHNICAL FIELD

The present invention relates to the field of communications technologies, and in particular, to a random access method and an apparatus.

### BACKGROUND

Implementation of a random access (random access channel, RACH) process in the prior art specifically includes the following steps:

In an uplink, a terminal device (Terminal Device) sends a random access preamble (preamble) sequence to an evolved NodeB (evolved NodeB, eNB).

The eNB sends a random access response (Random Access Response, RAR) message to the terminal device. The random access response message carries uplink (UL) grant information.

The terminal device sends a message 3 based on the uplink (UL) grant information in the random access response message, and the message 3 may include different content depending on different scenarios. Specific content may be a connection establishment request, a re-establishment request, or the like.

The eNB sends a message 4 to the terminal device. A function of the message 4 is to perform contention resolution, and the message 4 is corresponding to different content in different RACH scenarios.

In the prior art, after a radio resource control (Radio Resource Control, RRC) connection is established between a terminal device and an evolved NodeB 1 (eNB 1), if the eNB1 is heavily loaded, the terminal device may experience a plurality of RACH conflicts in an RACH process. Therefore, after an RACH fails, the terminal device repeatedly executes the RACH until the terminal device accesses a system or a maximum quantity of times of sending a preamble sequence is reached. To resolve the foregoing problem, in the solution provided in the prior art, the eNB1 notifies, by using a broadcast message, each terminal device which type of terminal device can access the eNB 1.

Because the broadcast message is updated slowly, when some terminal devices cannot access an eNB due to causes such as relatively heavy load of the eNB, a delay is caused if it is determined, by using the broadcast message, that the terminal devices cannot access the eNB.

### SUMMARY

Embodiments of the present invention provide a random access method and an apparatus, to resolve a prior-art problem of a long delay in a random access solution.

According to a first aspect, an embodiment of the present invention provides a random access method, including: receiving, by a first network device, a preamble sequence sent by a terminal device; and sending, by the first network device, a first message to the terminal device according to the preamble sequence, where the first message includes access information of a second network device, and the access information of the second network device enables the terminal device to continue to perform a random access process on the second network device based on the access information.

In a possible design, the sending, by the first network device, a first message to the terminal device according to the preamble sequence includes: sending, by the network device, the first message to the terminal device by using a random access response message, a Media Access Control control element MAC CE message, or a contention resolution message.

In a possible design, the access information includes one or a combination of more of: bandwidth for accessing the second network device by the terminal device, a center frequency, an access random code, a cell identity, random access channel frequency domain information, random access channel time domain information, random access channel beam information, a timing advance TA of the second network device, a cell radio network temporary identifier C-RNTI, and an uplink grant.

In a possible design, before the sending, by the first network device, a first message to the terminal device according to the preamble sequence, the method further includes:
sending, by the first network device, an access request to the second network device, where the access request is used to request the second network device whether to allow the terminal device to gain access; and after receiving an access request response message sent by the second network device, determining, by the first network device based on the access request response message, that the second network device allows the terminal device to gain access.

In a possible design, the access request includes one or more of ID information, context information, and capability information that are of the terminal device.

According to a second aspect, an embodiment of the present invention provides a random access method, including: sending, by a terminal device, a preamble sequence; receiving, by the terminal device, a first message sent by a network device; determining a target network device from at least one network device based on access information of the at least one network device that is included in the first message; and performing, by the terminal device, a random access process on the target network device.

In a possible design, the network device includes a first network device to which the terminal device is attached, or a second network device different from the first network device.

In a possible design, the sending, by a terminal device, a preamble sequence includes: sending, by the terminal device, a plurality of preamble sequences at a plurality of resource locations, where the plurality of resource locations include one or a combination of more of: a plurality of frequency domain locations, a plurality of time domain locations, a plurality of code domain locations, a plurality of beams, a plurality of base stations, a plurality of transmission reception points TRPs, a plurality of central units, and a plurality of distribution units.

In a possible design, the access information includes one or a combination of more of: bandwidth for accessing the second network device by the terminal device, a center frequency, an access random code, a cell identity, random access channel frequency domain information, random access channel time domain information, and random access channel beam information.

According to a third aspect, a network device is provided, including a transceiver and a processor, where the transceiver is configured to: receive a preamble sequence sent by a terminal device, and send a first message generated by the processor to the terminal device; and the processor is configured to generate the first message, where the first message includes access information of a second network device, and the access information of the second network device enables the terminal device to continue to perform a random access process on the second network device based on the access information.

In a possible design, the transceiver is specifically configured to send the first message to the terminal device by using a random access response message, a Media Access Control control element MAC CE message, or a contention resolution message.

In a possible design, the processor is specifically configured to add, to the first message as the access information, one or a combination of more of: bandwidth for accessing the second network device, a center frequency, an access random code, a cell identity, random access channel frequency domain information, random access channel time domain information, random access channel beam information, a timing advance TA of the second network device, a cell radio network temporary identifier C-RNTI, and an uplink grant.

In a possible design, the transceiver is further configured to: send an access request to the second network device before sending the first message to the terminal device according to the preamble sequence, where the access request is used to request the second network device whether to allow the terminal device to gain access; and after receiving an access request response message sent by the second network device, determine, based on the access request response message, that the second network device allows the terminal device to gain access.

In a possible design, the access request includes one or more of ID information, context information, and capability information that are of the terminal device.

According to a fourth aspect, a terminal device is provided, including: a transceiver, configured to send a preamble sequence, and receive a first message sent by a network device; and a processor, configured to: determine a target network device from at least one network device based on access information of the at least one network device that is included in the first message, and perform a random access process on the target network device.

In a possible design, the network device includes a first network device to which the terminal device is attached, or a second network device different from the first network device.

In a possible design, the transceiver is specifically configured to send a plurality of preamble sequences at a plurality of resource locations, where the plurality of resource locations include one or a combination of more of: a plurality of frequency domain locations, a plurality of time domain locations, a plurality of code domain locations, a plurality of beams, a plurality of base stations, a plurality of transmission reception points TRPs, a plurality of central units, and a plurality of distribution units.

In a possible design, the access information includes one or a combination of more of: bandwidth for accessing the second network device by the terminal device, a center frequency, an access random code, a cell identity, random access channel frequency domain information, random access channel time domain information, and random access channel beam information.

In the method and the apparatus provided in the embodiments of the present invention, after receiving the preamble sequence sent by the terminal device, the network device sends, to the terminal device, the access information of the at least one network device that can allow access of the terminal device, so that the terminal can select one of the at least one network device for access, thereby shortening a delay of accessing a network by the terminal device.

### BRIEF DESCRIPTION OF DRAWINGS

FIG. 1 is a schematic flowchart of a random access method according to Embodiment 1 of the present invention;
FIG. 2 is a schematic flowchart of a random access method according to Embodiment 2 of the present invention;
FIG. 3 is a schematic structural diagram of a network device according to Embodiment 3 of the present invention; and
FIG. 4 is a schematic structural diagram of a terminal device according to Embodiment 4 of the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention.

An implementation idea of the embodiments of the present invention is as follows: A first network device receives a preamble sequence sent by a terminal device; and the first network device sends a first message to the terminal device according to the preamble sequence, where the first message includes access information of a second network device, and the access information of the second network device enables the terminal device to continue to perform a random access process on the second network device based on the access information.

In the method provided in the embodiments of the present invention, after the preamble sequence sent by the terminal device is received, information about at least one network device that can allow access of the terminal device is sent to the terminal device, so that the terminal can select one of the at least one network device for access, thereby shortening a delay of accessing the network device by the terminal.

A network device in the embodiments of the present invention may be a base station or an access point, or may be a device that is in an access network and that communicates, over an air interface, with a wireless terminal by using one or more sectors. The base station may be configured to: mutually convert a received over-the-air frame and an IP packet, and serve as a router between the wireless terminal and a rest portion of the access network, where the rest portion of the access network may include an Internet protocol (IP) network. The base station may further coordinate attribute management of the air interface. For example, the base station may be a base transceiver station (Base Transceiver Station, BTS) in GSM or CDMA, or may be a NodeB (NodeB) in WCDMA, or may be an evolved NodeB (eNB or e-NodeB, evolved NodeB) in LTE, or may be an access network device in a 5G network. This is not limited in this application.

The terminal device in the embodiments of the present invention may be a device that provides a user with voice and/or data connectivity, a handheld device with a wireless connection function, or another processing device connected to a wireless modem. The wireless terminal may communicate with one or more core networks through a radio access network (Radio Access Network, RAN). The wireless terminal may be a mobile terminal such as a mobile phone (also referred to as a "cellular" phone) and a computer with a mobile terminal, for example, may be a portable, pocket-sized, handheld, computer built-in, or in-vehicle mobile apparatus, which exchanges voice and/or data with the radio access network. For example, the wireless terminal may be a device such as a personal communication service (Personal Communication Service, PCS) phone, a cordless telephone set, a Session Initiation Protocol (SIP) phone, a wireless local loop (Wireless Local Loop, WLL) station, or a personal digital assistant (Personal Digital Assistant, PDA). The wireless terminal may also be referred to as a system, a subscriber unit (Subscriber Unit), a subscriber station (Subscriber Station), a mobile station (Mobile Station), a mobile console (Mobile), a remote station (Remote Station), an access point (Access Point), a remote terminal (Remote Terminal), an access terminal (Access Terminal), a user terminal (User Terminal), a user agent (User Agent), a terminal device (User Device), or user equipment (User Equipment).

The following further describes the embodiments of the present invention in detail with reference to the drawings of this specification.

### Embodiment 1

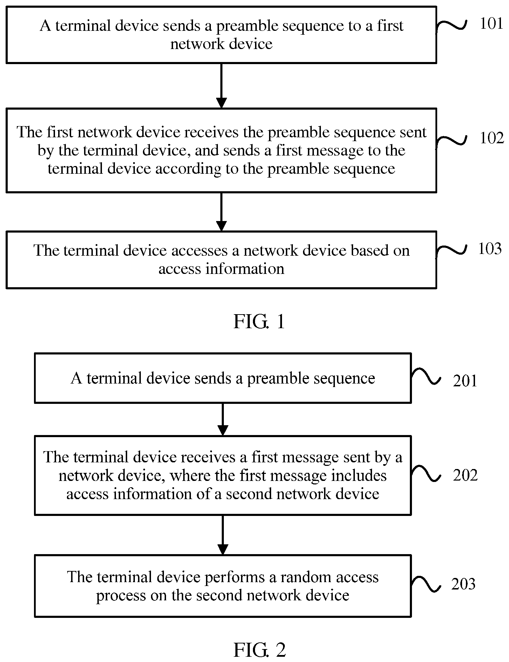

As shown in FIG. 1, this embodiment of the present invention provides a random access method, and the method for implementing a procedure specifically includes the following steps.

Step 101: A terminal device sends a preamble sequence to a first network device. In an optimal manner in this embodiment of the present invention, a network device may be a base station, a control node, a relay, a home eNB (Home eNB, HeNB), a distribution unit (distribution unit, DU), a central unit (central unit, CU), and a transmission reception point (transmission reception point, TRP).

The terminal device selects a preamble sequence (preamble), and sends the selected preamble to the first network device. A plurality of preambles meet orthogonality. Therefore, when the network device receives different preambles, because the preambles meet orthogonality, the network device may decode each preamble.

In this embodiment, the preamble may belong to a packet. The network device may send the preamble packet to the terminal device by using a broadcast message or a dedicated control message, and the terminal device that receives the preamble packet accesses the first network device or a second network device by using the preamble packet, that is, the terminal device use different preambles for different base stations.

Step 102: The first network device receives the preamble sequence sent by the terminal device, and sends a first message to the terminal device according to the preamble sequence, where the first message includes access information of a second network device, and the access information of the second network device enables the terminal device to continue to perform a random access process on the second network device based on the access information.

In this embodiment, the first network device can send an access message of another network device (the another network device includes the second network device that the terminal device finally accesses, and another network device capable of accepting the terminal device) to the terminal device only when a specific condition is met, which may be specifically as follows:

When a parameter collected by the first network device meets a preset condition, a response message sent by the first network device to the terminal device includes access information of another cell; otherwise, the first network device sends a basic response message to the terminal device. The basic response message includes a timing advance (Timing Advance, TA) of a cell corresponding to the first network device, a cell radio network temporary identifier (Cell Radio Network Temporary Identifier, C-RNTI), and a UL grant. The preset condition may be that the first network device determines that a load quantity of the first network device exceeds a specified threshold. There may be a plurality of specific determining criteria, which are not specifically limited herein.

In this embodiment, the terminal device may access the second network device based on the access message of the second network device. Therefore, the access information may include one or a combination of more of: bandwidth for accessing the second network device, a center frequency, an access random code, a cell identity, random access channel frequency domain information, random access channel time domain information, random access channel beam information, a TA of the second network device, a C-RNTI, and an uplink grant. When the first network device can allow access of the terminal device in a current running situation and load situation, the access message may also include information about the first network device, so that the terminal device accesses the first network device based on the information.

A manner in which the first network device sends the first message to the terminal device according to the preamble sequence may be as follows:

The network device sends the first message to the terminal device by using a random access response message, a Media Access Control control element MAC CE message, or a contention resolution message.

Optionally, whether the terminal device can access the second network device needs to be determined by the second network device. Therefore, before sending the first message to the terminal device according to the preamble sequence, the first network device may further determine, in a specific manner, whether the second network device can allow access of the terminal device. A specific implementation may be as follows:
A1. The first network device sends an access request to the second network device, where the access request is used to request the second network device whether to allow the terminal device to gain access.
   Optionally, the access request includes one or more of ID information, context information, and capability information that are of the terminal device.
A2. After receiving an access request response message sent by the second network device, the first network device determines, based on the access request response message, that the second network device allows the terminal device to gain access.

Optionally, in this embodiment, after receiving a response message fed back by the network device, the terminal device may access a proper network based on a parameter in the response message. A specific implementation may be as follows:
Step 103: The terminal device accesses a network device based on the access information.

In this embodiment, after receiving the first message, the terminal device may send, to the network device, a message 3 (Msg3) or another feedback message based on a random access process after steps 101 and 102.

In addition, after receiving the first message, the terminal device may further send, according to the access information carried in the first message, a preamble to a network device indicated in the access information. Specifically, if the access information indicates a plurality of network devices, the terminal device may send a preamble to the plurality of network devices, or may send a preamble to one or more network devices that are selected from the plurality of network devices in a specific manner or by using a parameter. In addition, if the access information indicates one network device, the terminal device sends the preamble to the network device.

### Embodiment 2

As shown in FIG. 2, this embodiment of the present invention further provides another random access method, and the method specifically includes the following steps.

Step 201: A terminal device sends a preamble sequence.

Optionally, the terminal device selects a preamble for sending. The preamble may be a preamble in a special packet. The special packet is sent by using a broadcast message or a dedicated RRC message. A main function of the preamble in the special packet is that the terminal device may perform random access on a plurality of cells by using the preamble in the special packet.

In addition, the terminal device may send a plurality of preamble sequences at a plurality of resource locations, where the plurality of resource locations include one or a combination of more of: a plurality of frequency domain locations, a plurality of time domain locations, a plurality of code domain locations, a plurality of beams, a plurality of base stations, a plurality of TRPs, a plurality of central units, and a plurality of distribution units.

Step 202: The terminal device receives a first message sent by a network device, where the first message includes access information of a second network device, and the access information of the second network device enables the terminal device to continue to perform a random access process on the second network device based on the access information.

In this embodiment, the network device may include a first network device to which the terminal device is attached; and/or the second network device different from the first network device.

Step 203: The terminal device performs the random access process on the second network device based on the access information of the second network device.

In this embodiment, because the first message received by the terminal device may include access information of a plurality of network devices, before performing random access, the terminal device may determine a target network device (which may be the second network device in this embodiment) from at least one network device based on access information of the at least one network device that is included in the first message.

Optionally, the access information includes one or a combination of more of: bandwidth for accessing the second network device by the terminal device, a center frequency, an access random code, a cell identity, random access channel frequency domain information, random access channel time domain information, and random access channel beam information.

Optionally, in step 201 of this embodiment, the terminal may send the preamble sequence to a plurality of network devices, and network devices that receive the preamble sequence include the first network device and the second network device. Therefore, before the first message is fed back to the terminal device, the following specific implementation is used between the first network device and the second network device to determine whether the second network device can allow access of the terminal device.

B1. The first network device receives the first message sent by the second network device. The first message is used to indicate that the second network device receives the preamble of the terminal device, and the terminal device can access the second network device.

B2. After receiving the preamble sent by the terminal device, the first network device sends an RACH redirection request to the second network device. The request is used to instruct to enable the terminal device to access the second network device.

### Embodiment 3

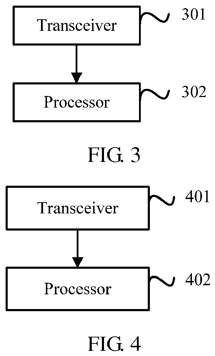

As shown in FIG. 3, this embodiment of the present invention further provides a network device, including a transceiver 301 and a processor 302.

The transceiver 301 is configured to: receive a preamble sequence sent by a terminal device, and send a first message generated by the processor to the terminal device.

The processor 302 is configured to generate the first message, where the first message includes access information of a second network device, and the access information of the second network device enables the terminal device to continue to perform a random access process on the second network device based on the access information.

Optionally, the transceiver 301 is specifically configured to send the first message to the terminal device by using a random access response message, a Media Access Control control element MAC CE message, or a contention resolution message.

Optionally, the processor 302 is specifically configured to add, to the first message as the access information, one or a combination of more of: bandwidth for accessing the second network device, a center frequency, an access random code, a cell identity, random access channel frequency domain information, random access channel time domain information, random access channel beam information, a timing advance TA of the second network device, a cell radio network temporary identifier C-RNTI, and an uplink grant.

Optionally, the transceiver 301 is further configured to: send an access request to the second network device before sending the first message to the terminal device according to the preamble sequence, where the access request is used to request the second network device whether to allow the terminal device to gain access; and after receiving an access request response message sent by the second network device, determine, based on the access request response message, that the second network device allows the terminal device to gain access.

Optionally, the access request includes one or more of ID information, context information, and capability information that are of the terminal device.

### Embodiment 4

As shown in FIG. 4, this embodiment of the present invention further provides a terminal device, including a transceiver 401 and a processor 402.

The transceiver 401 is configured to: send a preamble sequence, and receive a first message sent by a network device, where the first message includes access information of a second network device, and the access information of the second network device enables the terminal device to continue to perform a random access process on the second network device based on the access information.

Optionally, the network device includes a first network device to which the terminal device is attached; or the second network device different from the first network device.

Optionally, the access information includes one or a combination of more of: bandwidth for accessing the second network device by the terminal device, a center frequency, an access random code, a cell identity, random access channel frequency domain information, random access channel time domain information, and random access channel beam information.

Optionally, the transceiver 401 is specifically configured to send a plurality of preamble sequences at a plurality of resource locations, where the plurality of resource locations include one or a combination of more of: a plurality of frequency domain locations, a plurality of time domain locations, a plurality of code domain locations, a plurality of beams, a plurality of base stations, a plurality of TRPs, a plurality of central units, and a plurality of distribution units.

The processor 402 is configured to perform the random access process on the second network device based on the access information of the second network device.

In the solutions provided in Embodiment 1 to Embodiment 4, the network device and the terminal device may transmit and receive data by using a beam or an omnidirectional antenna.

In the method and the apparatus provided in the embodiments of the present invention, after receiving the preamble sequence sent by the terminal device, the network device sends, to the terminal device, access information of at least one network device that can allow access of the terminal device, so that the terminal can select one of the at least one network device for access, thereby shortening a delay of accessing the network device by the terminal.

The present invention is described with reference to the flowcharts and/or block diagrams of the method, the device (system), and the computer program product according to the embodiments of the present invention. It should be understood that computer program instructions may be used to implement each process and/or each block in the flowcharts and/or the block diagrams, and a combination of a process and/or a block in the flowcharts and/or the block diagrams. These computer program instructions may be provided for a general-purpose computer, a dedicated computer, an embedded processor, or a processor of another programmable data processing device to generate a machine, so that the instructions executed by a computer or a processor of the another programmable data processing device generate an apparatus for implementing a specific function in one or more processes in the flowcharts and/or in one or more blocks in the block diagrams.

These computer program instructions may be alternatively stored in a computer readable memory that can instruct the computer or another programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may be alternatively loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Obviously, a person skilled in the art can make various modifications and variations to the present invention without departing from the spirit and scope of the present invention. In this way, the present invention is intended to cover these modifications and variations provided that they fall within the scope of protection defined by the following claims and their equivalent technologies.

## Claims

1. A random access method, comprising:
receiving, by a first network device, a preamble sequence sent by a terminal device; and
sending, by the first network device, a first message to the terminal device according to the preamble sequence, wherein the first message comprises access information of a second network device, and the access information of the second network device enables the terminal device to continue to perform a random access process on the second network device based on the access information.

2. The method according to claim 1, wherein the sending, by the first network device, a first message to the terminal device according to the preamble sequence comprises:
sending, by the network device, the first message to the terminal device by using a random access response message, a Media Access Control control element MAC CE message, or a contention resolution message.

3. The method according to claim 1, wherein the access information comprises one or a combination of more of: bandwidth for accessing the second network device by the terminal device, a center frequency, an access random code, a cell identity, random access channel frequency domain information, random access channel time domain information, random access channel beam information, a timing advance TA of the second network device, a cell radio network temporary identifier C-RNTI, and an uplink grant.

4. The method according to claim 1, wherein before the sending, by the first network device, a first message to the terminal device according to the preamble sequence, the method further comprises:
sending, by the first network device, an access request to the second network device, wherein the access request is used to request the second network device whether to allow the terminal device to gain access; and
after receiving an access request response message sent by the second network device, determining, by the first network device based on the access request response message, that the second network device allows the terminal device to gain access.

5. The method according to claim 4, wherein the access request comprises one or more of ID information, context information, and capability information that are of the terminal device.

6. A random access method, comprising:
sending, by a terminal device, a preamble sequence;
receiving, by the terminal device, a first message sent by a network device, wherein the first message comprises access information of a second network device, and the access information of the second network device enables the terminal device to continue to perform a random access process on the second network device based on the access information; and
performing, by the terminal device, the random access process on the second network device based on the access information of the second network device.

7. The method according to claim 6, wherein the sending, by a terminal device, a preamble sequence comprises:
sending, by the terminal device, a plurality of preamble sequences at a plurality of resource locations, wherein the plurality of resource locations comprise one or a combination of more of: a plurality of frequency domain locations, a plurality of time domain locations, a plurality of code domain locations, a plurality of beams, a plurality of base stations, a plurality of transmission reception points TRPs, a plurality of central units, and a plurality of distribution units.

8. The method according to claim 6, wherein the access information comprises one or a combination of more of: bandwidth for accessing the second network device by the terminal device, a center frequency, an access random code, a cell identity, random access channel frequency domain information, random access channel time domain information, and random access channel beam information.

9. A network device, comprising a transceiver and a processor, wherein
the transceiver is configured to: receive a preamble sequence sent by a terminal device, and send a first message generated by the processor to the terminal device; and
the processor is configured to generate the first message, wherein the first message comprises access information of a second network device, and the access information of the second network device enables the terminal device to continue to perform a random access process on the second network device based on the access information.

10. The network device according to claim 9, wherein the transceiver is specifically configured to send the first message to the terminal device by using a random access response message, a Media Access Control control element MAC CE message, or a contention resolution message.

11. The network device according to claim 9, wherein the processor is specifically configured to add, to the first message as the access information, one or a combination of more of: bandwidth for accessing the second network device, a center frequency, an access random code, a cell identity, random access channel frequency domain information, random access channel time domain information, random access channel beam information, a timing advance TA of the second network device, a cell radio network temporary identifier C-RNTI, and an uplink grant.

12. The network device according to claim 9, wherein the transceiver is further configured to: send an access request to the second network device before sending the first message to the terminal device according to the preamble sequence, wherein the access request is used to request the second network device whether to allow the terminal device to gain access; and after receiving an access request response message sent by the second network device, determine, based on the access request response message, that the second network device allows the terminal device to gain access.

13. The network device according to claim 12, wherein the access request comprises one or more of ID information, context information, and capability information that are of the terminal device.

14. A terminal device, comprising:
a transceiver, configured to: send a preamble sequence, and receive a first message sent by a network device, wherein the first message comprises access information of a second network device, and the access information of the second network device enables the terminal device to continue to perform a random access process on the second network device based on the access information; and
a processor, configured to perform the random access process on the second network device based on the access information of the second network device.

15. The terminal device according to claim 14, wherein the transceiver is specifically configured to send a plurality of preamble sequences at a plurality of resource locations, wherein the plurality of resource locations comprise one or a combination of more of: a plurality of frequency domain locations, a plurality of time domain locations, a plurality of code domain locations, a plurality of beams, a plurality of base stations, a plurality of transmission reception points TRPs, a plurality of central units, and a plurality of distribution units.

16. The terminal device according to claim 14, wherein the access information comprises one or a combination of more of: bandwidth for accessing the second network device by the terminal device, a center frequency, an access random code, a cell identity, random access channel frequency domain information, random access channel time domain information, and random access channel beam information.
